# EUROPEAN PATENT SPECIFICATION

(11) **EP 0 595 884 B1**
(45) Date of publication and mention of the grant of the patent: **26.03.1997**
(21) Application number: 92915434.2
(22) Date of filing: 16.07.1992
(51) Int. Cl.: B65G 1/20

(54) **STORAGE AND TRANSPORTATION RACK FOR PANEL PARTS**
LAGER-UND TRANSPORTGESTELL FÜR PLATTENTEILE
CREMAILLERE DE TRANSPORT ET DE STOCKAGE POUR PANNEAUX

(30) Priority: 19.07.1991 DE 4124045
(43) Date of publication of application: 11.05.1994
(73) Proprietor: FORD FRANCE S. A., 92506 Rueil-Malmaison Cédex (FR); FORD MOTOR COMPANY LIMITED, Brentwood, Essex CM13 3BW (GB); FORD-WERKE AKTIENGESELLSCHAFT, 50735 Köln (DE)
(72) Inventor: NIEDERPRUEM, Klaus, Dieter, D-5010 Bergheim (DE)
(74) Representative: Messulam, Alec Moses
(86) International application number: GB9201305
(87) International publication number: WO9301999

(56) References cited:
- DD-A- 246 966

## Description

### Field of the invention

The invention relates to a storage and transportation rack for panel parts of substantially the same format, comprising a plurality of bearer rails arranged parallel to one another and fixed to the rack that provide, at uniform pitch, equally-spaced mounting positions for individual load-carrying arms each of which is pivotable against a restoring force from a swung-in rest position through an intermediate position in which corresponding arms are held in readiness for loading simultaneously and jointly with a panel part, into a swung-out load-supporting position defined by a stop position on a bearer rail, adjacent load-supporting arms being connected by pull-elements anchored thereto, arranged in front of their respective pivot axles on their load-carrying side and having a length of pull, dependent on the distance apart of the mounting points of the respective load-carrying arms, effective to pivot the load-carrying arms in succession from the rest position into the intermediate position. Such a rack will be referred to hereinafter as a rack of the kind described.

Depending on the format of the panel part, such racks will employ at least three and usually four or even more corresponding load-carrying arms mounted on different bearer rails to provide support at appropriate points spaced around the panel part.

In the case of vertical stacking of the panel parts the bearer rails may take the form of pillars mounted on a base or movable platform, e.g. a pallet suitable for transportation by a fork-lift truck.

### Background of the invention

DD-A-246 976 discloses an upright magazine for impeller parts of radial fans in which the parts are stacked on a rack of this kind. In this rack adjacent load-carrying arms are connected by elastic cables arranged in front of their respective pivot axles so as to effect pivoting of the respective arms in succession from a raised rest position through an intermediate loading position down to a load-carrying position against the restoring force of a counterweight on the arms on the opposite side of their pivot axles. In this apparatus the control of the pivoting depends on the elasticity of the cables.

In another storage and transportation rack, known from DE-A 38 14 452, the connecting means controlling the pivoting of the load-carrying arms from the rest position into the intermediate position comprise angled control arms that are provided on the load-carrying arms on the side of their pivot axes remote from the load-supporting side. Cooperating with each of the control arms is a respective adjusting arm of the adjacent load-carrying arm, which also cooperates with the respective rail to define the stop position of its load-carrying arm in the swung-out load-supporting position. In the load-supporting position of its associated load-carrying arm the working surface of each control arm runs parallel to its respective rail.

If the stacking spacing is changed by the use of mounting points a different distance apart the control of the pivoting of the load-carrying arms from the rest position to the intermediate position may readily be adapted to the different stacking spacing by the use of control arms of different length or geometry. For the adjusting arms, however, only one preset length is required, related to the pitch of the mounting points. Thus with this known rack it is relatively simple to exchange a small stacking spacing for a greater one, which may for example correspond to twice or three times the pitch, or vice versa.

Nevertheless the arrangement of the control arms and the adjusting arms on the load-carrying arms in the known rack, with the control arms and the adjusting arms of the successive load-carrying arms offset to gaps in the direction of the pivot axes, and the complicated means used to mimic the controlled pivoting of the load-carrying arms from the rest position into the intermediate position, involve correspondingly high manufacturing costs both for the individual load-carrying arms and also for the assembly of the rack as a whole.

### Object of the invention

It is an object of the present invention to provide an improved storage and transportation rack for panel parts in which successive pivoting movements of the load-carrying arms from the rest position can be controlled by simple means while at the same time retaining the possibility of changing the stacking spacing between the successive individual load-carrying arms in a simple manner.

### Summary of the invention

To this end the invention provides a storage and transportation rack of the kind described wherein each pull-element comprises a sheet metal strip of which the two ends are passed through slit openings in its two associated load-carrying arms to provide a slidable lost-motion connection, defined by the effective length of pull, between its anchorages on its two associated load-carrying arms.

### Preferred features of the invention

In one embodiment of the invention the sheet metal strip has oppositely disposed bent flaps at its two ends that act as hooks to engage with the respective arms. At one end a further flap facing the flap at that end is advantageously formed so as to cooperate with it to hold the strip in position longitudinally relative to the respective arm. Two slit openings are formed in each load-carrying arm to receive the strips connecting it to the arms on either side: these openings are advantageously located side by side on a common alignment line at right angles to the pivot axle of the arm.

The use in the rack of the invention of connecting means comprising separate pull-elements provides the primary advantage of a correspondingly uncomplicated method of manufacture for the load-carrying arms. While they primarily only control the pivoting of the load-carrying arms in succession from the rest position into the intermediate position, such separate pull-elements also allow trouble-free pivoting of the load-carrying arms between the individual relative positions on the bearer rails. It is therefore also possible, by simply changing the effective length of pull of the pull-elements or exchanging pull-elements for others having suitable different predetermined effective lengths of pull, to adapt the rack for use with changed spacings for the mounting positions of the load-carrying arms.

### Brief description of the drawings

An embodiment of the storage and transportation rack of the invention is shown diagrammatically in the drawings by way of example, and will now be described in more detail. In the drawings:
Fig. 1 is a perspective view of the rack illustrating the different pivot positions of the load-carrying arms that are taken up for loading with panel parts,
Fig. 2 is a side view of the rack, likewise illustrating the different pivot positions of the individual load-carrying arms, and
Fig. 3 is a sectional view to illustrate the swung-out load-supporting position of a load-carrying arm.

### Description of the preferred embodiment

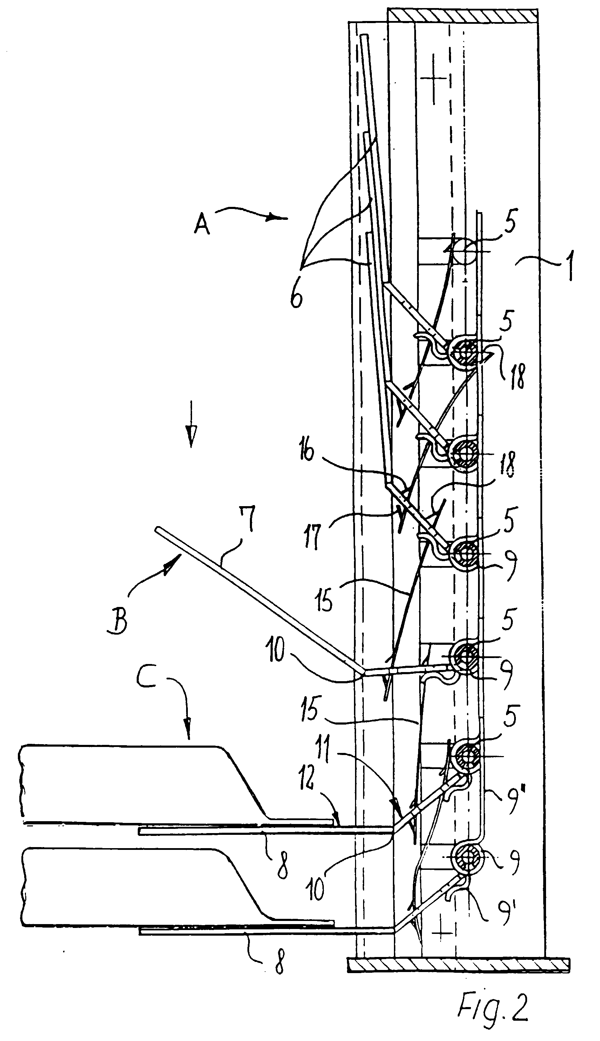

In a storage and transportation rack for panel parts according to the invention, individual bearing rails are arranged parallel to one another on a rack of any desired form. Part of one such bearing rail in the form of an upright pillar 1 is shown in Fig. 1. On each such pillar a corresponding number of individual load-carrying arms 6, 7, 8 are mounted to pivot on respective axles 5 mounted at mounting positions that are equally spaced along all the pillars at a uniform pitch. All the load-carrying arms in the rack are pivotable using the same mechanism from a swung-in rest position A, through an intermediate position B in which corresponding arms on each of the pillars are simultaneously held in readiness for joint loading with a panel part, into a swung-out load-supporting position C. In each case the load-supporting position is defined by a stop position of the load-carrying arm on its respective associated pillar 1. As is further shown in Fig. 1, the pillar 1 is made up of individual plates 2, 3 and 4 assembled to form a U-section and carries the pivot axles 5 of the various load-carrying arms 6, 7, 8 in uniformly spaced mountings in the side plates 2 and 3.

The load-carrying arms 6, 7 and 8 are preloaded individually by respective return springs 9 into the rest position A shown for the load-carrying arm 6. The return springs 9 are in the form of spiral springs that are arranged around the pivot axle 5 of the associated load-carrying arm with their one end 9' bearing on the associated load-carrying arm and their other end 9" supported on the respective next load-carrying arm. Alternatively, should the rack only be intended for vertical installation, the restoring force of such return springs 9 used in this way to preload each load-carrying arm into its swung-in rest position could be replaced by an arrangement of counterweights on the pivot axles on the side remote from the load-supporting side of the load-carrying arm.

The individual load-carrying arms 6, 7 and 8 are in the form of plates. The plate area of each load-carrying arm is divided by a bend line 10 parallel to the associated pivot axle 5 into an angled section 11 near the pivot axle and a section 12 on which the panel parts are placed.

The angled section 11 of each load-carrying arm is provided with two openings 13 and 14 in the form of slits about half way along the pivot axle 5 and side by side on a common alignment line at right angles to the pivot axle. These slit openings 13 and 14 provide anchorages for individual pull-elements 15 that are arranged in front of the pivot axles of the load-carrying arms on their load-supporting side and form a means of connection between adjacent load-carrying arms that allows the following load-carrying arms to be pivoted in succession from the rest position into the intermediate position as the immediately preceding load-carrying arm in an intermediate position is loaded with a panel part.

In the embodiment illustrated the pull-elements 15 that are provided in this way as connecting means between adjacent load-carrying arms each comprise a sheet metal strip that is provided at one end with two bent flaps 16 and 17 facing one another and at its other end with a further bent flap 18 facing the first end of the strip. The ends of each metal strip provided with these bent flaps are passed through the slit openings 13 and 14 in adjacent load-carrying arms 6 and 7 or 7 and 8 as the case may be. Each of the bent flaps 16, 17, 18 thus acts as a hook or barb to provide an anchorage of the pull-elements 15 to the respective load-carrying arms. The two facing bent flaps 16 and 17 on the one end of each metal strip provide a fixed reference point for the effective length of pull of each pull-element. The distance from this reference point to the bent flap 18 at the other end of the strip determines the extent of a lost motion connection defined by the effective length of pull between the two load-carrying arms adjacent to each respective pull-element. The effective length of pull of each pull-element 15 thus only controls the pivoting of the load-carrying arm from the rest position A into the intermediate position B, though of course the lost motion connection effected by this distance apart of the bent flaps at the two ends of the strip is present both in the swung-in rest position A and in the swung-out load-supporting position C of the two load-carrying arms associated with each pull-element. The reference point given by the two bent flaps 16 and 17 at the one end of the strip is thus used both for the pivoting of the load-carrying arms from the intermediate position B into the load-supporting position C and also, when pivoting the load-carrying arms in cooperation with the return springs 9 from the load-supporting position C back into the rest position A, to push the opposite end of the strip having the one bent flap 18 further through the respective associated slit 13 towards the pivot axle 5 of the adjacent load-carrying arm.

If, as is preferred, the material of the sheet metal strips is flexible, this allows the strips to deflect past the pivot axle 5 and to provide guiding contact between the metal strips and this pivot axle. As can be seen from the uppermost two positions shown in Fig. 2, this contact may be on either side of the axle 5.

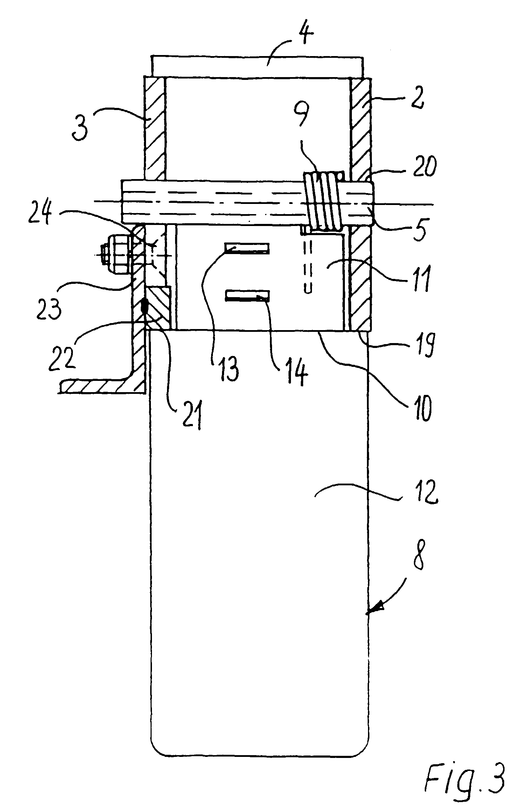

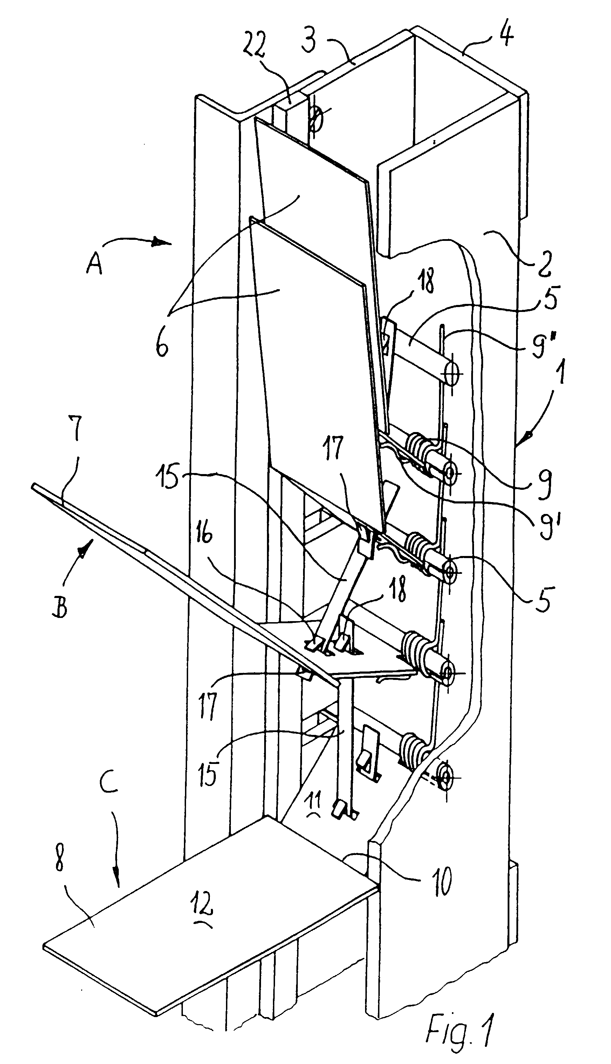

Figs. 1 and 3 also show how a limiting stop is formed at the bend line 10 of each load-carrying arm, to provide a stop position for the swung-out load-supporting position C on the pillar 1. The plate part 12 of the arm is somewhat wider than the plate part 11, so that it projects beyond the plate part 11 on each side. A first limiting stop 19 is thus obtained with respect to the side plate 2 of the pillar 1, in which the mounting positions for one end of the pivot axles 5 comprise individual bores 20. A second limiting stop 21 is formed on the other hand with respect to a stop strip 22 that is screwed removably by means of an angle rail 23 on to the other side plate 3 of the pillar 1.

The angle rail 23 also serves to secure the other ends of the pivot axles 5 of all the load-carrying arms in their mounting positions, which comprise mounting slots 24 in the plate 3 corresponding to the pitch distance of the mounting bores 20. This angle rail 23 also provides a stop surface for the panel parts when they are loaded on to the load-carrying arms.

Instead of forming the bent flaps on the sheet metal strips, in another way of providing the anchorage of the pull-elements to the two respectively associated load-carrying arms at least one hole for inserting a spring clip or the like is provided at one end of the strip, while the other end of the strip is enlarged relative to the associated insertion opening, for example by a cross-head, the distance of which from the spring clip then gives an analogous lost motion connection between a pair of associated load-carrying arms. By providing a plurality of insertion holes at different distances from the cross-head it is possible with this embodiment to provide at the same time a simple means of changing the extent of the lost motion connection.

It will be appreciated that the invention thus provides a rack in which loading one supporting arm with a panel art causes the next adjacent arm to be moved into position ready for loading, while itself moving freely against the restoring force of the spring or the like to the load-supporting position, and that conversely on unloading the top panel in a stack the arm holding it is returned under the action of the restoring force to the ready-to-load position, from which furthermore as the panel part held on the arm immediately below it is unloaded the arm is moved on upwards by the restoring force until it has been returned to the rest position.

## Claims

1. A storage and transportation rack for panel parts of substantially the same format, comprising a plurality of bearer rails arranged parallel to one another and fixed to the rack that provide, at uniform pitch, equally-spaced mounting positions for individual load-carrying arms each of which is pivotable against a restoring force from a swung-in rest position (A), through an intermediate position (B) in which corresponding arms are held in readiness for loading simultaneously and jointly with a panel part, into a swung-out load-supporting position (C) defined by a stop position on a bearer rail, adjacent load-carrying arms (6, 7, 8) being connected by pull-elements (15) anchored thereto, arranged in front of their respective pivot axles (5) on their load-supporting side and having a length of pull, dependent on the distance apart of the mounting points of the respective load-carrying arms, effective to pivot the load-carrying arms in succession from the rest position (A) into the intermediate position (B),
characterised in that
each pull-element (15) comprises a sheet metal strip the two ends of which are passed through slit openings (13, 14) in its two associated load-carrying arms (6, 7, 8) to provide a slidable lost-motion connection, defined by the effective length of pull, between its anchorages on its two associated load-carrying arms (6, 7, 8).

2. A storage and transportation rack according to claim 1, characterised in that the two ends of the metal strip are anchored to the load-carrying arms by oppositely disposed bent flaps (16, 17, 18) each acting in the manner of a hook, the distance apart of which determines the length of the lost motion connection, and that each load-carrying arm (6, 7, 8) has at least two slit openings (13, 14) therein for anchoring respective strips to provide the connection with the two adjacent load-carrying arms (6, 7, 8).

3. A storage and transportation rack according to claim 2, characterised in that the two slit openings (13, 14) in each load-carrying arm (6, 7, 8) are formed side by side on a common alignment line at right angles to the associated pivot axle (5).

4. A storage and transportation rack according to any preceding claim, characterised in that each strip is flexible.

5. A storage and transportation rack according to any preceding claim, characterised in that each load-carrying arm (6, 7, 8) has an angled section (11) near the pivot axle (5) on which the anchorages for the pull-elements (15) of its two associated load-carrying arms are formed, and that the bend line (10) of the angled section (11) provides a limiting stop for the stop position of the load-carrying arm.

## Patentansprüche

1. Lager- und Transportgestell für plattenförmige Teile von im wesentlichen gleichem Format, mit einer Mehrzahl von parallel zueinander angeordneten und an dem Gestell befestigten Trägerschienen, welche in gleichmäßiger Teilung in gleichem Abstand von einander angeordnete Aufhängungspositionen für einzelne Lastaufnahmearme schafft, wovon jeder gegen eine Rückstellkraft von einer eingeklappten Ruhestellung (A) über eine Zwischenstellung (B), in welcher entsprechende Arme in einer Bereitschaftsstellung zur gleichzeitigen und gemeinsamen Beladung mit einem plattenförmigen Teil, in eine ausgeklappte Lastaufnahmestellung (C) verschwenkbar ist, die durch eine Anschlagstellung auf einer Trägerschiene definiert ist, wobei einander benachbarte Lastaufnahmearme (6, 7, 8) über darin verankerte Zugelemente (15) miteinander verbunden sind, welche vor den entsprechenden Schwenkachsen (5) auf der Lastaufnahmeseite der Arme angeordnet sind und eine Zuglänge aufweisen, die von dem Abstand der Aufhängungspunkte der jeweiligen Lastaufnahmearme von einander abhängig ist und derart wirkt, daß sie die Lastaufnahmearme nacheinander von der Ruhestellung (A) in die Zwischenstellung (B) verschwenkt,
dadurch gekennzeichnet, daß jedes Zugelement (15) aus einem Blechstreifen besteht, dessen beide Enden durch schlitzförmige Öffnungen (13, 14) in den ihm zugeordneten Lastaufnahmearmen (6, 7, 8) geführt werden, so daß eine gleitende Totgangverbindung entsteht, die von der effektiven Zuglänge bestimmt wird, und zwar zwischen den Verankerungspunkten an den beiden zugehörigen Lastaufnahmearmen (6, 7, 8).

2. Lager- und Transportgestell nach Anspruch 1, dadurch gekennzeichnet, daß die beiden Enden des Metallstreifens an den Lastaufnahmearmen durch einander gegenüber angeordnete abgewinkelte Zungen (16, 17, 18) verankert sind, von denen jede wie ein Haken wirkt, deren Abstand von einander die Länge des Totgangverbindung bestimmt, und daß jeder Lastaufnahmearm (6, 7, 8) wenigstens zwei schlitzartige Öffnungen (13, 14) aufweist, in welchen die betreffenden Streifen eingehängt werden, so daß eine Verbindung mit den beiden benachbarten Lastaufnahmearmen (6, 7, 8) hergestellt wird.

3. Lager- und Transportgestell nach Anspruch 2, dadurch gekennzeichnet, daß die beiden schlitzförmigen Öffnungen (13, 14) in jedem Lastaufnahmearm (6, 7, 8) nebeneinander auf einer gemeinsamen Fluchtlinie und im rechten Winkel zu der entsprechenden Schwenkachse (5) ausgebildet sind.

4. Lager- und Transportgestell nach einem beliebigen der vorangehenden Ansprüche, dadurch gekennzeichnet, daß jeder der Blechstreifen biegsam ist.

5. Lager- und Transportgestell nach einem beliebigen der vorangehenden Ansprüche, dadurch gekennzeichnet, daß jeder Lastaufnahmearm (6, 7, 8) einen abgewinkelten Abschnitt (11) nahe der Schwenkachse (5) aufweist, in welchem die Verankerungspunkte für die Zugelemente (15) der beiden ihm zugeordneten Lastaufnahmearme eingeformt sind, und daß die Falzlinie (10) des abgewinkelten Abschnittes (11) einen Begrenzungsanschlag für die Anschlagstellung des Lastaufnahmearmes bildet.

## Revendications

1. Crémaillère de stockage et de transport pour des panneaux ayant sensiblement le même format, comprenant une pluralité de rails porteurs disposés parallèlement les uns aux autres et fixés à la crémaillère qui procurent, suivant un pas uniforme, des positions de montage espacées de façon égale pour des bras porteurs de charge individuels, dont chacun peut pivoter, en s'opposant à une force de rappel, entre une position de repos repliée (A), en passant par une position intermédiaire (B) dans laquelle des bras correspondants sont maintenus prêts au chargement simultané et conjoint avec un panneau, jusque dans une position dépliée de support de charge (C), définie par une position d'arrêt sur un rail porteur, les bras porteurs de charge (6, 7, 8) adjacents étant reliés par des éléments de tirage (15) qui y sont fixés, disposés sur l'avant de leurs axes de pivotement (5) respectifs sur leur côté de support de charge, et ayant une longueur de tirage, dépendant de l'espacement des points de montage des bras porteurs de charge respectifs, efficace pour faire pivoter successivement les bras porteurs de charge depuis la position de repos (A) jusque dans la position intermédiaire (B),
caractérisée en ce que
chaque élément de tirage (15) comprend une bande de tôle dont les deux extrémités sont introduites au travers d'ouvertures en fente (13, 14) dans ses deux bras porteurs de charge (6, 7, 8) associés afin de procurer une liaison coulissante à course à vide, définie par la longueur de tirage effective, entre ses fixations sur ses deux bras porteurs de charge (6, 7, 8) associés.

2. Crémaillère de stockage et de transport selon la revendication 1, caractérisée en ce que les deux extrémités de la bande de métal sont fixées aux bras porteurs de charge par des pattes recourbées (16, 17, 18) disposées en opposition, agissant chacune à la manière d'un crochet, dont l'espacement détermine la longueur de la liaison à course à vide, et en ce que chaque bras porteur de charge (6, 7, 8) comporte au moins deux ouvertures en fente (13, 14) dans celui-ci pour la fixation des bandes respectives afin de permettre la liaison avec les deux bras porteurs de charge (6, 7, 8) adjacents.

3. Crémaillère de stockage et de transport selon la revendication 2, caractérisée en ce que les deux ouvertures en fente (13, 14) de chaque bras porteur de charge (6, 7, 8) sont formées côte à côte sur une ligne commune d'alignement à angle droit avec l'axe de pivotement (5) associé.

4. Crémaillère de stockage et de transport selon l'une quelconque des revendications précédentes, caractérisée en ce que chaque bande est flexible.

5. Crémaillère de stockage et de transport selon l'une quelconque des revendications précédentes, caractérisée en ce que chaque bras porteur de charge (6, 7, 8) comporte un tronçon incliné (11), proche de l'axe de pivotement (5), sur lequel sont formés les points de fixation destinés aux éléments de tirage (15) de ses deux bras porteurs de charge associés, et en ce que la ligne de pliage (10) du tronçon incliné (11) définit une butée d'arrêt définissant la position d'arrêt du bras porteur de charge.
